# EUROPEAN PATENT APPLICATION

(11) **EP 1 223 733 A2**
(43) Date of publication of application: **17.07.2002**
(21) Application number: 01310828.7
(22) Date of filing: 21.12.2001
(51) Int. Cl.: H04M 3/537, H04M 3/533, H04M 1/00, H04N 7/00

(54) **Accessing voicemail by using display screen and speakers of a television system**

(30) Priority: 11.01.2001 GB 0100737
(71) Applicant: Pace Micro Technology PLC, Saltaire, Shipley, BD18 3LF (GB)
(72) Inventor: Forrest, Simon, Ely, Cambridgeshire CB7 4FE (GB)
(74) Representative: Wood, Graham

(57) **Abstract**

A broadcast data receiver (BDR) (4) communicates with at least one telephone line (10). The telephone line (10) includes a voicemail service and the voice mail service is driven from said BDR (4). An audio and/or visual indication is generated via speakers or a display screen (6) forming part of or communicating with the BDR (4) to inform a user when one or more voicemail messages have been detected. The user can access the voicemail messages via the BDR (4) or via a telephone handset (14) in a conventional manner.

## Description

This invention relates to voicemail services, and particularly but not exclusively to means for accessing voicemail services.

Many telephone users subscribe to voicemail/answer phone services that are provided by their telephone network provider. Conventional voicemail services typically inform the user that a message is awaiting retrieval at a telephone exchange by changing the dial tone of the telephone handset from a normal dial tone to a user recognised "message waiting" tone. The user typically retrieves the message by inputting a code into the telephone handset to access the various options of the voicemail service.

Disadvantages with this system is that only a single person can listen to messages at any one time unless multiple handsets are provided. In addition, a user is typically only aware that a message is awaiting retrieval when the handset is picked up and establishes that the dial tone has changed from a normal dial tone to a message waiting tone. This is a particular disadvantage if, for example, the user is continually moving in and out of range of the telephone ring in a premises. The user would then have to continually pick up the telephone to see if a message was left whilst they were out of range of the telephone ring, and this is likely to be time consuming.

A broadcast data receiver (BDR) is a device which typically forms part of a television system in a home. The BDR receives digital data from a broadcaster at a remote location via satellite, cable and/or terrestrial systems and generates video, audio and/or auxiliary data for display on a display screen of the television system or via speakers. Conventionally the digital data received, stored and transmitted by the BDR relates to programme and/or channel information.

An aim of the present invention is to provide a voicemail service which overcomes the abovementioned problems.

According to a first aspect of the present invention there is provided a BDR, said BDR communicating with at least one telephone line, said at least one telephone line including a voicemail service and characterised in that said voicemail service is driven from said BDR.

Typically the BDR is provided in the same premises or locality as the telephone line and/or telephone handset.

Preferably the voicemail service is driven from the broadcast data receiver (BDR) in addition to, or as an alternative to conventional use of the voicemail service using a handset of the at least one telephone line.

In one embodiment the BDR communicates with the telephone line via a modem in the BDR, and the BDR modem is in turn connected to the telephone line. In an alternative embodiment the BDR modem is connected to the telephone line via a second modem.

Preferably the broadcast data receiver is provided with or communicates with a display screen to form part of a television system and a visual indication can be provided on the display screen when a message is received by the voicemail service. The user can then access the message using the telephone handset in a conventional manner or via control functions of the broadcast data receiver. For example, the contents of the message can be retrieved and displayed on the display screen or played through speakers.

In one embodiment a remote control handset is used to access and control voicemail messages downloaded to the BDR.

Preferably the visual indication is any or any combination of a message, LED display or icon, such as an image of a telephone.

In one embodiment an audio indication is provided to indicate to the user that a message is waiting to be retrieved.

In a yet further embodiment, the broadcast data receiver periodically and/or continually monitors the dial tone of the telephone line and then automatically downloads/communicates any messages waiting to the BDR.

Preferably a user interface is provided for display on the display screen to allow a user to retrieve, edit, store and delete voice messages received by the voice mail service, create and manipulate voicemail "boxes", access other services provided by the telephone exchange and/or the like.

In one embodiment the message is played to the user using the speakers of the television system, thereby allowing more than one user to listen to the voicemail messages. In an alternative embodiment the message is played to the user using additional audio equipment provided in or communicating with the broadcast data receiver.

Preferably the modem of the BDR, or second modem communicating with the modem in the BDR, is provided with a modem command and response to enable BDR/modem software to determine when a voicemail message is waiting at the telephone exchange. The modem command allows the modem and/or BDR to distinguish between the normal dial tone of the telephone and the "message waiting" tones provided by the voicemail service. If a standard dial tone is detected, then a signal is sent to the BDR to indicate that no messages are waiting. If a message waiting tone is detected a signal is sent to the BDR, which in turn generates a message or similar on the display screen to inform a user that a message is waiting at the telephone exchange.

According to a second aspect of the present invention there is provided a voicemail service for at least one telephone line, characterised in that a broadcast data receiver (BDR) communicates with said at least one telephone line and said voicemail service is driven directly from said broadcast data receiver.

According to a further aspect of the present invention there is provided a method of using a BDR to drive a voicemail service for at least one telephone line, said method including the steps of said BDR and/or modem(s) connecting the BDR to the telephone line monitoring said telephone line for voicemail messages, when a voicemail message is detected on said telephone line and/or at a telephone exchange, initiating a signal in or to said BDR to generate a visual and/or audio indication to inform a user that a voicemail message is waiting.

An advantage of the present invention is that it allows voicemail telephony services to be controlled from the broadcast data receiver of a television system, without the requirement for the user to pick up the telephone handset and manually operate the voicemail service. In addition, the user interface of the broadcast data receiver allows the voicemail service to be more user friendly than having to remember codes for typing into a telephone handset. The invention provides a quick and easy form of visual and/or audio indication that a message is waiting to be retrieved. Furthermore, the invention allows more than one user to listen to a voicemail message at the same time, which is not normally possible with normal telephone voicemail systems unless more than one handset is available.

An embodiment of the present invention will now be described with reference to the accompanying figure wherein:

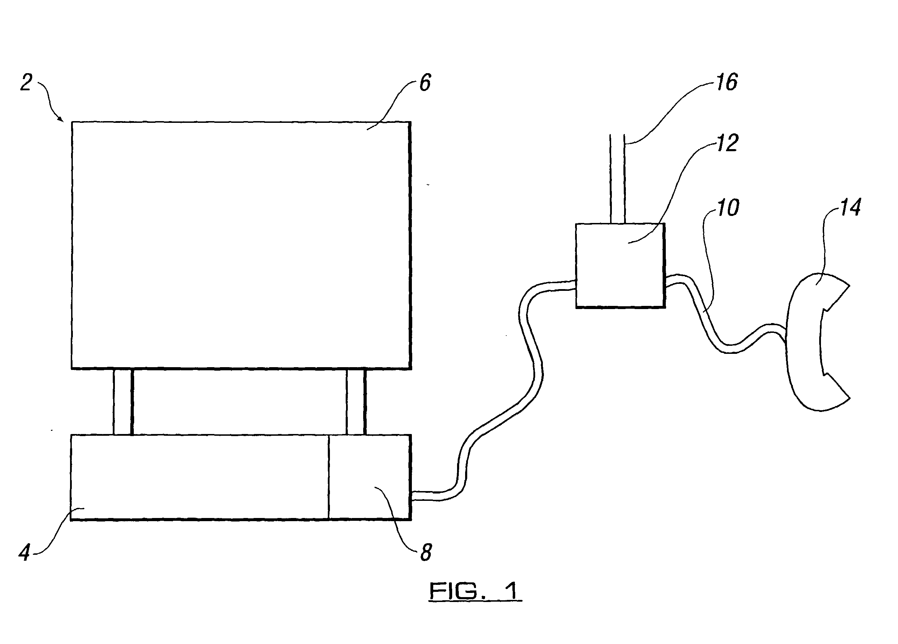

Figure 1 is a schematic representation of an embodiment of the present invention.

Referring to Figure 1, there is illustrated a television system 2 including a broadcast data receiver (BDR) 4 connected to a television display screen 6.

The BDR 4 includes a modem 8 which is connected to a home telephone line 10 via a junction box 12 located in a premises. The telephone line 10 is provided with at least one handset 14.

The BDR 4 and the telephone line 10 are connected to an external telephone line 16.

The telephone service provided by the telephone company of telephone line 10 includes a voicemail service. Messages left on the voicemail service are stored at an exchange until a time convenient to the user when they can listen, store, delete the same and/or the like.

In accordance with the present invention, the voicemail service is driven directly from the broadcast data receiver 4 via modem 8.

The modem 8 of the BDR is able to distinguish between the normal dial tone of the telephone line and the "message waiting" tone provided by the voicemail service, as described below.

The modem signals to the BDR when a message is waiting at the telephone exchange and a visual indication in the form of a message, LED display and/or telephone icon is displayed on display screen 6. Thus a user can easily and quickly see that a message is waiting for them without having to use the telephone handset. An audio indication can also be provided to indicate to the user that a message is waiting.

The BDR is provided with a user interface for display on the display screen 6. The user interface allows the user to retrieve, store and delete voicemail messages received by the voicemail service. In addition, the interface allows the user to create and manipulate voicemail "boxes" and/or allows access of other services provided by the telephone company.

The voicemail message can be played through the speakers of the television or additional sound hardware can be provided in the BDR to receive audio data input from the modem and route it to the television speakers via conventional audio modulation hardware. Playback of voicemail messages via the television speakers allows more than one user to listen to the messages at any one time if desired.

The modem 8 is typically provided with additional commands and/or responses to detect and signal to the BDR whether a message is waiting, For example, assuming that the additional modem command is "AT#MSG?", an example of a modem terminal program can be :
- AT#MSG?
- MESSAGE WAITING
- OK

In this instance, the modem has detected that the message waiting tone is being generated by the telephone exchange. The other possibility is:
- AT#MSG?
- NO MESSAGES
- OK

In this instance, the modem has detected a normal dialtone.

The standard modem OK response is also generated to indicate to the data terminal equipment that no error condition has been generated.

Thus it can be seen that the present invention combines digital television with voicemail telephony services to provide a more user friendly voicemail service.

## Claims

1. A broadcast data receiver (BDR), said BDR (4) communicating with at least one telephone line (10), said at least one telephone line (10) including a voicemail service and **characterised in that** said voice mail service is driven directly from said BDR (4).

2. A BDR according to claim 1 **characterised in that** the voicemail service is driven through the BDR (4) in addition to or as an alternative to conventional use of the voicemail service using a handset (14) of said telephone line (10).

3. A BDR according to claim 1 **characterised in that** said BDR (4) communicates with the telephone line (10) via a first modem (8) in the BDR, the first modem (8) in the BDR being connected to said telephone line (10).

4. A BDR according to claim 1 **characterised in that** said BDR (4) communicates with the telephone line (10) via a first modem (8) in the BDR, the first modem being connected to a second modem and the second modem in turn being connected to said telephone line (10).

5. A BDR according to claim 1 **characterised in that** said BDR is provided with or communicates with a display screen (6) and/or speakers, and a visual and/or audio indication is provided for display on said display screen (6) or playing through said speakers respectively when one or more messages is/are received by the voicemail service.

6. A BDR according to claim 6 **characterised in that** a user can access said messages using the telephone handset (14) in a conventional manner and/or via control functions of the BDR (4).

7. A BDR according to claim 5 **characterised in that** the visual indication is any or any combination of an icon, message or LED display.

8. A BDR according to claim 1 **characterised in that** said BDR (4) periodically or continuously monitors the dial tone of the telephone line (10) and once the presence of one or more messages is/are detected, activates an audio and/or visual indication in the BDR that a message is waiting and/or downloads the message to the BDR.

9. A BDR according to claim 1 **characterised in that** a user interface is provided for display on the display screen (6) to allow a user to retrieve, store, edit and/or delete voice messages received by the voice mail service, create and manipulate voicemail "boxes" and/or access other services provided by the telephone exchange.

10. A BDR according to claims 3 or 4 **characterised in that** the first or second modems are provided with a modem command and response to allow the software of the BDR (4) or modem to determine when a voicemail message is waiting at a telephone exchange.

11. A BDR according to claim 10 **characterised in that** modem command allows the modem and/or BDR (4) to distinguish between a normal telephone dial tone and a message waiting dial tone provided by the voicemail service.

12. A BDR according to claim 11 **characterised in that** once a message has been detected a signal is sent to the BDR or activated in said BDR to allow a visual and/or audio indication to be generated by the BDR to inform a user that one or more messages is/are waiting.

13. A voicemail service for at least one telephone line, **characterised in that** a broadcast data receiver (BDR) communicates with said at least one telephone line and said voice mail service is driven directly from said BDR.

14. A method of using a BDR (4) to directly drive a voicemail service for at least one telephone line (10), said method including the steps of said BDR (4) and/or modem(s) connecting the BDR (4) to the telephone line (10) monitoring said telephone line for voicemail messages, when a voicemail message is detected on said telephone line and/or at a telephone exchange, initiating a signal in or to said BDR (4) to generate a visual and/or audio indication to inform a user that a voicemail message is waiting.

15. A method according to claim 14 **characterised in that** said telephone line is monitored using modem command and response software.

16. A method according to claim 15 **characterised in that** said modem command detects whether a normal dial tone or "message waiting" tone is being provided by the voicemail service and signals to said BDR accordingly.
